# EUROPEAN PATENT APPLICATION

(11) **EP 3 200 062 A1**
(43) Date of publication of application: **02.08.2017**
(21) Application number: 17153093.4
(22) Date of filing: 25.01.2017
(51) Int. Cl.: G06F 3/0488, G06F 3/0481, G06F 3/0486

(54) **OPENING INSTANCES OF AN ELECTRONIC OBJECT**

(30) Priority: 28.01.2016 US 201615008892
(71) Applicant: Prysm, Inc., San Jose, CA 95134 (US)
(72) Inventor: Fischer, Brandon, Carmel, 46033 (US)
(74) Representative: Scilletta, Andrea

(57) **Abstract**

A display environment engine for receiving sets of user inputs related to assets icons and/or assets of a display environment. An asset may comprise an application or object. In response to receiving a set of user inputs, the display environment engine maps the sets of user inputs to a corresponding set of functions using a mapping table to provide functionality to the display environment. A set of user inputs may comprise a selection of an asset icon (representing an asset) and an indication of user-selected location in the display environment, the first location being different than an original location of the asset icon. In response, the display environment engine opens and displays a new instance of the asset at the user-selected location. Multiple new instances of the asset may be opened and positioned in the display environment.

## Description

### BACKGROUND OF THE INVENTION

### Field of the Invention

Embodiments of the present invention generally relate to computer science and, more specifically, to techniques for opening instances of an asset.

### Description of the Related Art

A computer device may display an environment on a monitor, such as a desktop area. Icons may be displayed within the display environment, where each icon represents a different application or other electronic assets, such as a document, a picture, or the like. An icon may take the form of a picture that represents the asset or a small representation of what the asset actually looks like, if the full asset were present, such as the first page of a document or a graphic asset. A user may interact with an icon (representing a particular application) by selecting/clicking the icon, whereby the computer device then opens the particular application at a default location within the display environment. Currently, the default location where the application opens is set by the computer device and is not user selectable. The default location, however, is usually not the location within the display environment where the user ultimately wants the opened application to be located. To move the opened application to the desired location within the display environment, the user must manually select and move/drag the opened application to that desired location.

As described above, current techniques for opening applications through a displayed icon requires two separate sets of user interactions to produce a desired end result - one set of user interactions to open and display the application at a default location within the display environment and another set of user interactions to relocate the opened application from the default location to a desired location within the display environment. Thus, the current techniques for opening an application through a displayed icon are not efficient and require extra interactions by the user.

As the foregoing illustrates, what is needed in the art is a more effective technique for opening an application through an icon in a display environment.

### SUMMARY OF THE INVENTION

One embodiment of the invention includes a computer-implemented method for opening instances of an asset. The method includes displaying an asset icon at an original location in a display environment, the asset icon representing an original instance of an asset. The method further includes receiving a first selection of the asset icon and receiving a first indication of a first location in the display environment, the first location being different than the original location. The method also includes, in response to receiving the first selection and the first indication, opening and displaying a first instance of the asset at the first location.

At least one advantage of the disclosed technique is that it allows users to easily and efficiently open and position instances of an asset through an asset icon in a display environment. For example, the disclosed technique allows a user to open an instance of an asset at a desired location in a display environment without requiring relocation of the opened instance.

### BRIEF DESCRIPTION OF THE DRAWINGS

So that the manner in which the above recited features of the invention can be understood in detail, a more particular description of the invention, briefly summarized above, may be had by reference to embodiments, some of which are illustrated in the appended drawings. It is to be noted, however, that the appended drawings illustrate only typical embodiments of this invention and are therefore not to be considered limiting of its scope, for the invention may admit to other equally effective embodiments.
Figure 1 illustrates a system configured to implement one or more aspects of the present invention;
Figure 2 is a conceptual diagram illustrating how a first instance of an asset is opened within a display environment, according to various embodiments of the present invention;
Figure 3 is a conceptual diagram illustrating how a second instance of an asset is opened within a display environment, according to various embodiments of the present invention;
Figure 4 is a conceptual diagram illustrating how the first and second instances of the asset of Figures 2 and 3 are closed within a display environment, according to various embodiments of the present invention;
Figure 5 illustrates a flow diagram of method steps for opening at least one instance of an asset within a display environment, according to various embodiments of the present invention;
Figure 6 is a conceptual diagram of a mapping table, according to various embodiments of the present invention; and
Figure 7 illustrates a flow diagram of method steps for mapping a received set of user inputs to a set of functions, according to various embodiments of the present invention.

### DETAILED DESCRIPTION

In the following description, numerous specific details are set forth to provide a more thorough understanding of the present invention. However, it will be apparent to one of skill in the art that the present invention may be practiced without one or more of these specific details. In other instances, well-known features have not been described in order to avoid obscuring the present invention.

### System Overview

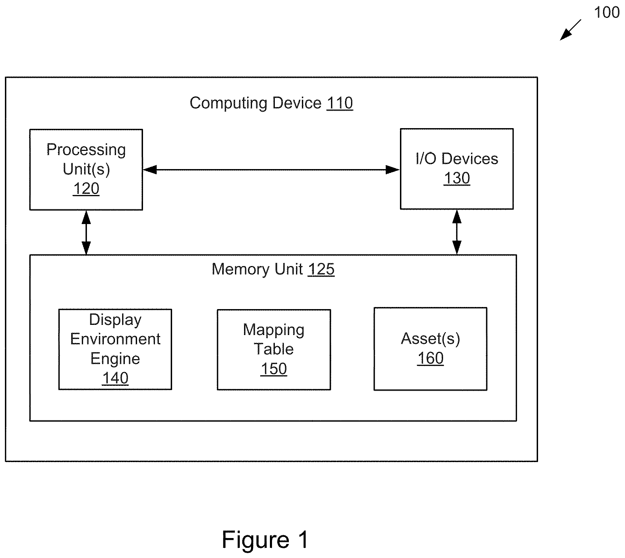

Figure 1 illustrates a system 100 configured to implement one or more aspects of the present invention. As shown, the system 100 includes, without limitation, a computing device 110. Computing device 110 may be a server system, client system, workstation, a laptop computer, a tablet, a hand-held device (such as cellular phone), or any other type of computing device.

Computing device 110 includes one or more processors 120 coupled to input/output (I/O) devices 130 and to memory unit 125. In general, a processor 120 may be any technically feasible hardware unit capable of processing data and/or executing software applications. For example, a processor 120 may comprise a central processing unit (CPU), a graphics processing unit (GPU), a digital signal processor (DSP), an application-specific integrated circuit (ASIC), a field programmable gate array (FPGA) or other programmable logic device, discrete gate or transistor logic, discrete hardware components, or any combination of different processing units, such as a CPU configured to operate in conjunction with a GPU.

I/O devices 130 are also coupled to memory unit 125 and includes input devices capable of receiving user input, output devices capable of generating output, as well as network devices capable of communicating via a network (not shown). Examples of input devices include a keyboard, a mouse, a touchscreen, a gesture-capture device (e.g., 3D camera), a laser (or other remote) pointer, a stylus, a microphone, or other input elements configured to capture user inputs. Examples of output devices include a monitor, a printer, or other output elements. The input and output devices allow an end-user access to the system 100.

The memory unit 125 is configured to store software application(s) and data. Instructions from the software constructs within the memory unit 125 are executed by processors 120 to enable the inventive operations and functions described herein. In various embodiments, the memory unit 125 is configured to store a display environment engine 140, a mapping table 150, and at least one asset 160. The processor 120 is configured to execute the display environment engine 140 to provide an underlying functionality of a display environment as described in various embodiments herein.

The display environment engine 140 may generate and display, via an output device (e.g., monitor), a display environment. For example, the display environment may comprise a desktop area or a user interface. The display environment engine 140 may also display, via the output device, an asset icon at an original/initial location in the display environment, the asset icon representing an original instance of an asset 160. An asset may comprise an application or object. An application may comprise a software program having executable code to perform functions, tasks, or activities for a user. The application may perform functions, tasks, etc. on an asset. A non-exhaustive list of examples of an application include a word processor, a spreadsheet, a web browser, a document viewer, an image viewer, a media player, etc. In some embodiments, an object may comprise a storage container (such as a file) for storing data. Each object may be associated with a particular type of application depending on the type of the object. A default application may be associated with an object (based on the object type) or the user may specify a particular application to be associated with an object. A non-exhaustive list of examples of an object include a document file (associated with a word processor application or document viewer application), a spreadsheet file (associated with a spreadsheet application), an image file (associated with an image viewer application), a media file (associated with a media player application), etc.

A user may provide, via an input device, a set of user inputs associated with/related to the asset icon, the set of user inputs being detected and received by the display environment engine 140. For example, the set of user inputs may comprise a selection of the asset icon and a drag and drop of the asset icon to a first location in the display environment, the first location being different than the original location. Upon detecting the set of user inputs, the display environment engine 140 processes the set of user inputs by mapping the set of user inputs to a particular set of functions using the mapping table 150. The set of functions may comprise one or more functions associated with/relating to the asset icon and/or the asset 160. The display environment engine 140 then executes the set of functions. For example, the set of functions may comprise opening a new instance of the asset at the first location. Output may be provided to the user by the display environment engine 140 via an output device, for example, to display the new instance of the asset at the first location in the display environment.

### Opening Instances of an Asset

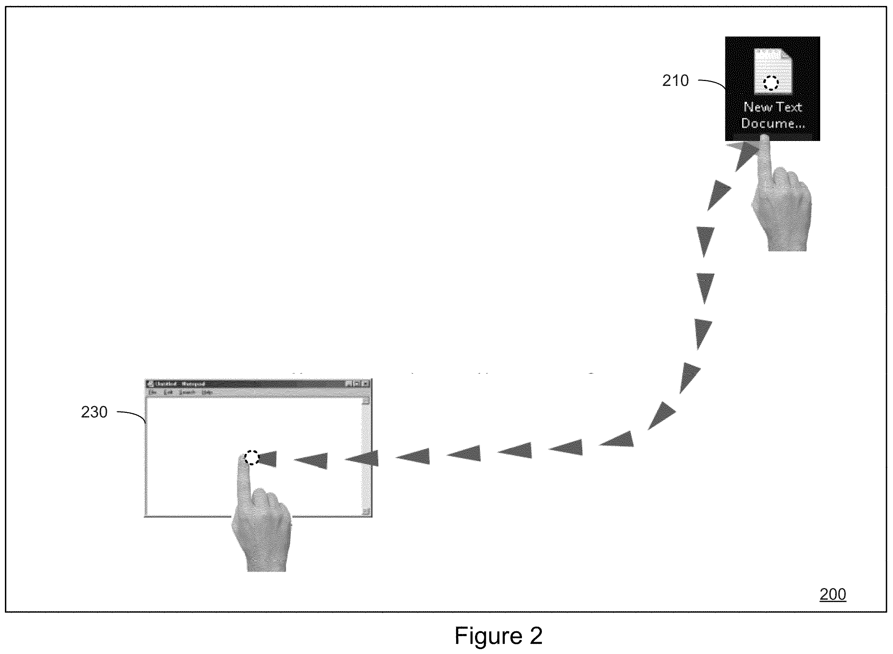

Figures 2-4 illustrate conceptual diagrams of user interactions and resulting functions relating to opening and closing instances of assets in a display environment.

Figure 2 is a conceptual diagram illustrating how a first instance of an asset is opened within a display environment, according to various embodiments of the present invention. As shown, the display environment engine 140 of the computing device 110 may display the display environment 200 on an output device, such as a monitor. For example, the display environment 200 may comprise a desktop area or a user interface. The display environment engine 140 may also display an asset icon 210 at an original/initial location in the display environment 200. For illustrative purposes, the original location of the asset icon 210 is represented in Figure 2 as a dashed circle at the center of the asset icon 210. In other embodiments, however, the original location of the asset icon 210 may be represented in a different manner or at a different point on the asset icon 210 (such as one of the corners of the asset icon 210). The asset icon 210 may represent an original instance of an asset comprising an application or an object (such as a file) associated with an application.

As also shown, a user may select the asset icon 210 (referred to as the first selection of the asset icon 210) at the original location (e.g., by positioning a user input device or finger either directly over the imaged asset icon or in proximity to the imaged asset icon, then clicking/acting on the asset icon 210 via a mouse or touching the asset icon 210 via a touchscreen) and provide an indication of a first location (referred to as the first indication of the first location) in the display environment 200, the first location being different than the original location. In some embodiments, the first location is selected by a user and does not comprise a default location that is set by the computing device 110. For example, an indication of the first location may be provided by the user by clicking/tapping on the first location via a mouse or touching/tapping the first location via a touchscreen. As another example, an indication of the first location may be provided by the user dragging and dropping the asset icon 210 at the first location. As used herein, the user inputs comprising "dragging" and "dropping" an asset icon 210 at a desired location comprises an engagement/selection of the asset icon, and while engaged/selected, the asset icon 210 is moved and stopped at the desired location, and then disengaged/de-selected, thereby placing the asset icon at the second location. In other embodiments, an indication of the first location may be provided by the user in any other manner that provides a user-selection of the first location in the display environment 200.

When the asset (represented by the asset icon 210) comprises an application, the display environment engine 140, in various embodiments, responds in the below-described manner. The display environment engine 140 receives and detects this first selection of the asset icon 210 and the first indication of the first location in the display environment 200. In response, the display environment engine 140 opens a new instance (first instance) of the asset (represented by the asset icon 210) and displays the first instance of the asset at the first location. As shown in Figure 2, the display environment engine 140 may open and display the first instance of the asset by opening and displaying a first window 220 for the first instance of the asset at a location within the display environment that is based on the first location. For example, the first location may comprise a center or a corner of the first window 220. For illustrative purposes, the first location is represented in Figure 2 as a dashed circle at the center of the first window 220. In other embodiments, however, the first location may comprise any other area/point in the first window 220 (such as one of the corners of the first window 220). As shown in the example of Figure 2, the first window 220 comprises only a sub-area of the display environment 200 and does not comprise the entire area of the display environment 200.

When the asset (represented by the asset icon 210) comprises an object associated with an application, the display environment engine 140, in various embodiments, responds in the below-described manner. The display environment engine 140 receives and detects this first selection of the asset icon 210 and the first indication of the first location in the display environment 200. In response, the display environment engine 140 opens a first instance of the object (represented by the asset icon 210) and displays the first instance of the object at the first location by opening and displaying a first instance of the application associated with the object at the first location and opening the object within the first instance of the associated application (to populate the first instance of the associated application with data from the object). For example, if the object is an image file, the display environment engine 140 may open and display a first instance of an image viewer application at the first location and open the image file within the first instance of the image viewer application. The display environment engine 140 may open and display the first instance of the associated application by opening and displaying a first window 230 for the first instance of the associated application at a location within the display environment that is based on the first location. The display environment engine 140 may then open and display the object within the first window 230.

As used herein, an instance of an asset may comprise a specific realization of the asset. The creation of a realized instance of the asset may be referred to as instantiation. For example, when an asset comprises an application, opening an instance of the application may include execution of the application. Thus, each time the application is executed, an instance of the application is opened. In some embodiments, multiple instances of an application may be opened so that multiple instances of the application are running concurrently.

As described above in relation to Figure 2, the display environment engine 140 provides an underlying functionality of the display environment 200 that enables a user to open and display an asset at a user-selected location (e.g., the first location) more efficiently and with fewer user interactions than with a conventional control environment. Conventionally, one set of user interactions is needed to open and display the asset at a default location and another set of user interactions is needed to relocate the asset from the default location to the user-selected location in the display environment 200. In some embodiments, the opened asset is displayed at the user-selected location without the user having to relocate the opened asset from a default location to the user-selected location. In these embodiments, the opened asset is displayed only at the user-selected location, and is not displayed at the default location during an intermediary step.

In various embodiments, after the display environment engine 140 opens and displays the first window 220 for the first instance of the asset at the first location, the display environment engine 140 also automatically places an input point (e.g., cursor) within the first window 220 to begin receiving user input within the first window (such as inputted text) at the input point. Thus, after the input point is placed within the first window 220, the next received user input may be received within the first window 220 at the input point. For example, the first window 220 may receive user input at the input point via a keyboard, a mouse, a touchscreen, a gesture-capture device, a laser (or other remote) pointer, a stylus, a microphone, or other input elements configured to capture user inputs. For example, received user input may include user navigation/control of an asset, user navigation/control within an asset, and/or content addition to within the asset.

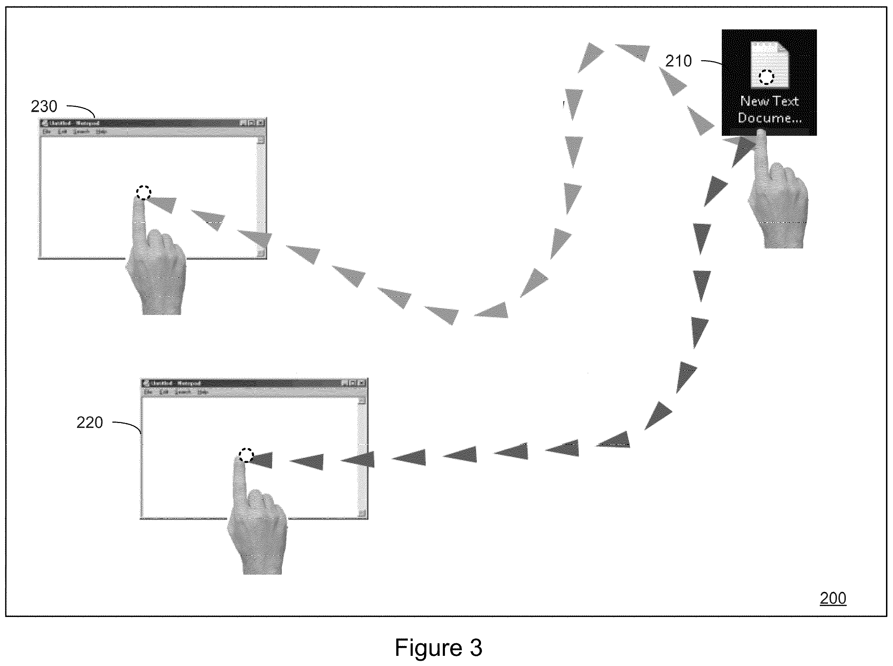

Figure 3 is a conceptual diagram illustrating how a second instance of an asset is opened within a display environment, according to various embodiments of the present invention. As shown, the display environment engine 140 may continue to display the asset icon 210 at the original location in the display environment 200. As also shown, a user may select the asset icon 210 (referred to as the second selection of the asset icon 210) at the original location and provide an indication of a second location (referred to as the second indication of the second location) in the display environment 200, the second location being different than the original location and the first location. The second location is selected by a user and does not comprise a default location that is set by the computing device 110.

When the asset (represented by the asset icon 210) comprises an application, the display environment engine 140, in various embodiments, responds in the below-described manner. The display environment engine 140 receives and detects this second selection of the asset icon 210 and the second indication of the second location in the display environment 200. In response, the display environment engine 140 opens and displays a second instance of the asset at the second location. As shown in Figure 3, the display environment engine 140 may open and display the second instance of the asset by opening and displaying a second window 230 for the second instance of the asset at a location that is based on the second location. For example, the second location may comprise a center or a corner of the second window 230. For illustrative purposes, the second location is represented in Figure 3 as a dashed circle at the center of the second window 230. As shown in the example of Figure 3, the second window 230 comprises only a sub-area of the display environment 200 and does not comprise the entire area of the display environment 200.

When the asset (represented by the asset icon 210) comprises an object associated with an application, the display environment engine 140, in various embodiments, responds in the below-described manner. The display environment engine 140 receives and detects this second selection of the asset icon 210 and the second indication of the second location in the display environment 200. In response, the display environment engine 140 opens and displays a second instance of the object (represented by the asset icon 210) at the second location by opening and displaying a second instance of the application associated with the object at the second location and opening the object within the second instance of the associated application (to populate the second instance of the associated application with data from the object). The display environment engine 140 may open and display the second instance of the associated application by opening and displaying a second window 230 for the second instance of the associated application at a location that is based on the second location. The display environment engine 140 may then open and display the object within the second window 230.

Similarly, the user may continue to open further instances of the asset at desired locations in the display environment 200 using the techniques described above. As described above in relation to Figures 2-3, the display environment engine 140 provides an underlying functionality of the display environment 200 that enables a user to easily open and display multiple instances of an asset at multiple user-selected locations (e.g., the first and second locations) more efficiently and with fewer user interactions than with a conventional display environment. Each instance of the asset will be distinct and separate from the other instances of the asset. For example, the second instance of the asset is distinct from the first instance of the asset. To illustrate, the asset may comprise a sticky note application for the user to record notes on various topics or projects. In some embodiments, although the first and second instances are separate instances of the asset, the second instance of the asset may be a replicate of the first instance of the asset and whatever state the first instance is in. For example, if a first instance of the sticky note application includes writing along the top of the sticky note, the second instance of the sticky note application may also include the writing along the top of the sticky note.

The display environment engine 140 enables the user to easily and quickly open and display multiple distinct instances of the sticky note application in multiple desired locations to record notes regarding multiple different topics or projects.

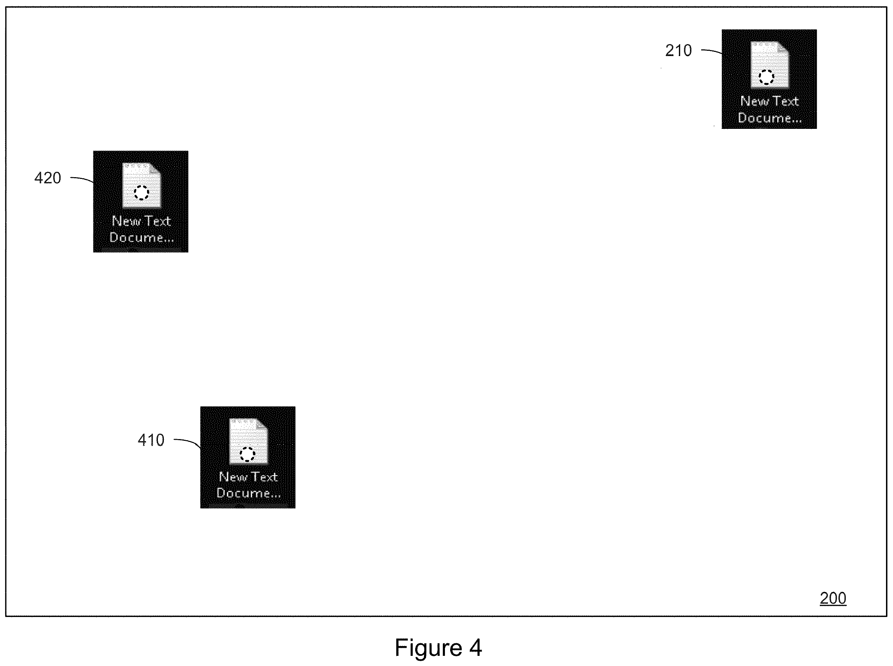

Figure 4 is a conceptual diagram illustrating how the first and second instances of the asset of Figures 2 and 3 are closed within a display environment, according to various embodiments of the present invention. The user may select to close or minimize the first instance and/or second instance of the asset (e.g., by selecting/clicking on the close or minimize button on the first window 220 and/or second window 230).

The display environment engine 140 receives and detects the user input for closing or minimizing the first instance of the asset. In response, the display environment engine 140 closes the first instance of the asset and generates and displays a first icon 410 at the first location, the first icon 410 representing the first instance of the asset. Generating an icon representing an asset is known in the art as "iconization" of the asset. The display environment engine 140 may close the first instance of the asset by closing the first window 220 for the first instance of the asset. Note that the display environment engine 140 displays the first icon 410 at a location based on the first location (which the user previously selected for displaying first instance of the asset). For illustrative purposes, the first location is represented in Figure 4 as a dashed circle at the center of the first icon 410, which corresponds to a link facility, that is the icon represents a link to the actual asset, which is resident in the device memory. In other embodiments, however, the first location may comprise any other area/point in the first icon 410 (such as one of the corners of the first icon 410).

Similarly, the display environment engine 140 receives and detects the user input for closing or minimizing the second instance of the asset. In response, the display environment engine 140 closes the second instance of the asset (by closing the second window 230) and generates and displays a second icon 420 at the second location, the second icon 420 representing the second instance of the asset. The display environment engine 140 displays the second icon 420 at a location based on the second location (which the user previously selected for displaying second instance of the asset). For illustrative purposes, the second location is represented in Figure 4 as a dashed circle at the center of the second icon 420. In other embodiments, however, the second location may comprise any other area/point in the second icon 420 (such as one of the corners of the second icon 420).

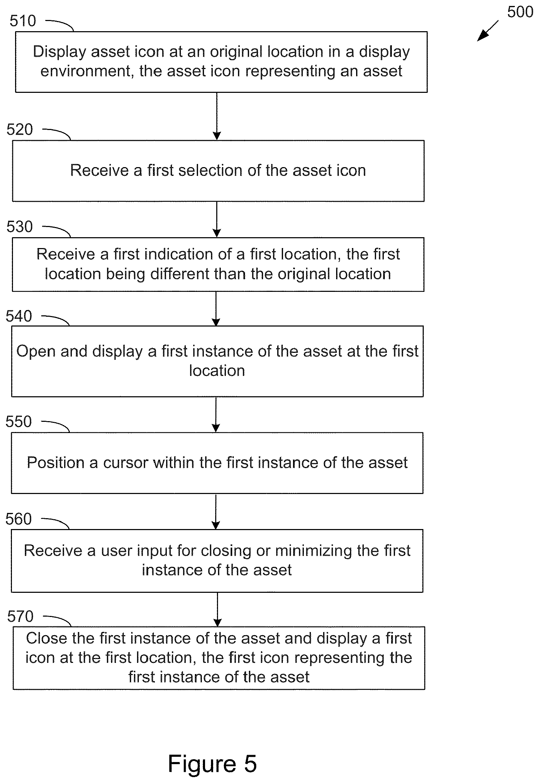

Figure 5 illustrates a flow diagram of method steps for opening at least one instance of an asset within a display environment, according to various embodiments of the present invention. Although the method steps are described in conjunction with the systems of Figures 1-4, persons skilled in the art will understand that any system configured to perform the method steps, in any order, is within the scope of the present invention.

As shown, a method 500 begins at step 510, where the display environment engine 140, when executed by processing unit 120, displays an asset icon 210 at an original location in the display environment 200. The asset icon 210 may represent an original instance of an asset comprising an application or an object. At step 520, the display environment engine 140 receives and detects a first selection of the asset icon 210 from a user. At step 530, the display environment engine 140 receives and detects a first indication of a first location in the display environment 200 from the user, the first location being different that the original location. For example, an indication of the first location may be provided by the user by clicking/tapping on the first location via a mouse or touching/tapping the first location via a touchscreen. As another example, an indication of the first location may be provided by the user dragging and dropping the asset icon 210 at the first location.

In response, the display environment engine 140 at step 540 opens a first instance of the asset (represented by the asset icon 210) and displays the first instance of the asset at the first location. If the asset comprises an object associated with an application, the display environment engine 140 at step 540 opens and displays a first instance of the application associated with the object at the first location and opens the object within the first instance of the associated application (to populate the first instance of the associated application with data from the object).

At step 550, the display environment engine 140 places an input point (e.g., cursor) within the first instance of the asset to begin receiving user input within the first instance (such as inputted text) at the input point. At step 560, the display environment engine 140 receives and detects a user input for closing or minimizing the first instance of the asset. In response, at step 570, the display environment engine 140 closes the first instance of the asset and generates and displays a first icon 410 at the first location, the first icon 410 representing the first instance of the asset. The method 500 may be repeated as needed to open multiple instances of the asset at multiple user-selected locations (as described in relation to Figure 3).

### Mapping Table and Alternative Embodiments

In general, when a set of user inputs is received and detected by the display environment engine 140, the display environment engine 140 processes the received set of user inputs by mapping the set of user inputs to a corresponding set of functions using the mapping table 150. Once the display environment engine 140 determines/identifies set of functions corresponding to the set of user inputs, the display environment engine 140 performs/executes the set of functions. For example, as described above in relation to Figures 2-5, a user may input, via an input device, a first selection of the asset icon and a first indication of a first location in the display environment, the first location being different than the original location. In response to receiving the first selection and the first indication, the display environment engine 140 opens and displays a first instance of the asset at the first location. Thus, the first selection and the first indication comprises a first set of user inputs that the display environment engine 140 maps to a first set of functions (opening and displaying the first instance of the asset at the first location) using the mapping table 150.

A received set of user inputs may comprise one or more user inputs. In some embodiments, the set of user inputs comprises a plurality of different types of user inputs. In further embodiments, the set of user inputs comprises a specific sequence of a plurality of user inputs. A particular user input may also include a specified time value or range, such as an elapsed amount of time or range of time that the particular user input must be continually received to be detected/identified by the display environment engine 140 as the particular user input. Different types of user inputs may be differentiated by different time values or ranges for the same user input. For example, a user selection of an asset icon for 1 second (e.g., clicking on the asset icon for 1 second) may be detected/identified by the display environment engine 140 as a different type of user input than a user selection of the asset icon for 3 seconds (e.g., clicking on the asset icon for 3 seconds).

A set of functions may comprise one or more functions relating to an asset icon and/or an asset 160. In some embodiments, the set of functions may comprise one or more functions to be performed on the asset icon and/or the asset 160. In further embodiments, the set of functions may comprise a specific combination of a plurality of functions that are performed on the asset icon and/or the asset 160. If the set of functions comprises a plurality of functions, the display environment engine 140 may perform all of the plurality of functions without requiring or receiving any further user inputs. For example, as described above in relation to Figure 2, after receiving the appropriate set of user inputs, the display environment engine 140 performs the both of the functions of opening the asset and displaying the asset at the first location, without requiring or receiving any further user inputs (such as user inputs that relocate the opened asset from a default location to the first location).

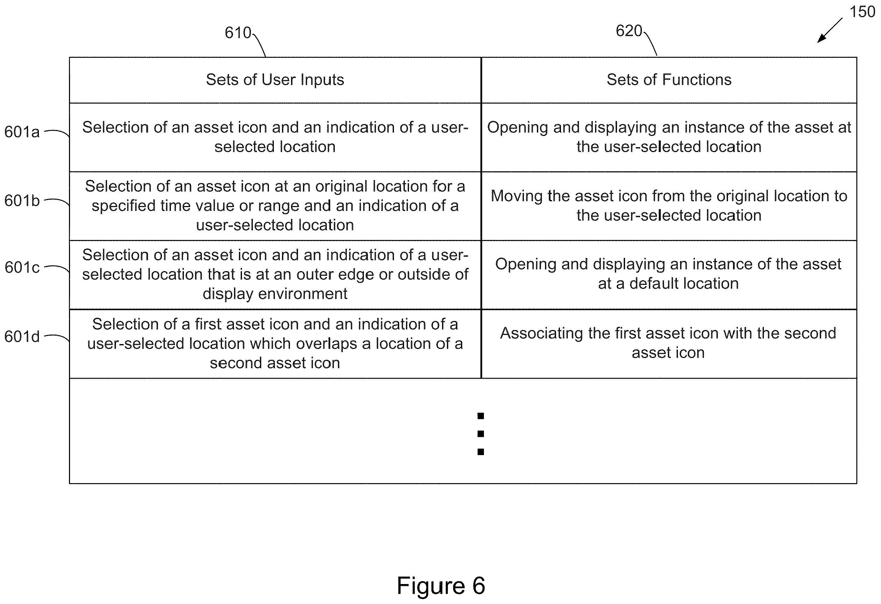

Figure 6 is a conceptual diagram of a mapping table, according to various embodiments of the present invention. The mapping table 150 comprises a plurality of entries 601 (such as 601 a, 601 b, etc.), each entry 601 representing a mapping from a set of user inputs 610 to a corresponding set of functions 620. For example, the content of the mapping table 150 may be preconfigured as part of the display environment engine 140 or user-programmable.

A first entry 601 a comprises a mapping from a first set of user inputs to a first set of functions, a second entry 601 b comprises a mapping from a second set of user inputs to a second set of functions, and so forth. In some embodiments, each set of user inputs 610 is distinct/different from each and every other set of user inputs 610 in the mapping table 150. For example, the second set of user inputs is different than the first set of user inputs and every other set of user inputs 610 in the mapping table 150.

In the example of Figure 6, the set of user inputs in the first entry 601 a comprises a selection of an asset icon and an indication of a user-selected location and the corresponding set of functions comprises opening and displaying an instance of the asset at the user-selected location (as described above in relation to Figures 2-5). In addition, other entries 601 in the mapping table 150 may include mappings for different sets of user inputs 610 and different sets of functions 620, as described below.

In some embodiments, a set of inputs comprises a selection of an asset icon at an original location for a specified time value or range and an indication of a user-selected location (which is different than the original location) and the corresponding set of functions comprises moving/relocating the asset icon from the original location to the user-selected location (i.e., no longer display the asset icon at the original location and display the asset icon at the user-selected location). Note that the selection of the asset icon is to be continually received for the specified time value or range for the display environment engine 140 to detect this set of user inputs. This mapping allows the user to move the asset icon to another location in the display environment 200 without creating a new instance of the asset represented by the asset icon. In the example of Figure 6, this mapping is shown as a second entry 601 b in the mapping table 150.

In some embodiments, a set of inputs comprises a selection of an asset icon and an indication of a user-selected location that is at an outer edge or outside of the display environment and the corresponding set of functions comprises opening and displaying an instance of the asset at a default location specified by the display environment engine 140. This mapping allows the user to open and display a new instance of the asset (represented by the asset icon) at the default location. In the example of Figure 6, this mapping is shown as a third entry 601 c in the mapping table 150.

In some embodiments, a set of inputs comprises a selection of a first asset icon and an indication of a user-selected location which overlaps a location of a second asset icon in the display environment 200 and the corresponding set of functions comprises associating/linking the first asset icon with the second asset icon. This mapping allows the user to associate asset icons with each other, whereby later user inputs relating to either asset icon causes corresponding mapped functions to be performed on both asset icons. In the example of Figure 6, this mapping is shown as a fourth entry 601 d in the mapping table 150.

In some embodiments, a set of inputs comprises a selection of an asset icon at an original location using two or more fingers and an indication of a user-selected location using two or more fingers and the corresponding set of functions comprises opening and displaying two or more instances of the asset (represented by the asset icon) at the user-selected location. In further embodiments, the instances of the asset may be displayed in a particular pattern (e.g., an array, circle, etc.) or displayed in different sizes (e.g., depending on type of asset or previous use of asset instances).

In some embodiments, a set of inputs comprises a selection of an asset icon at an original location at a sensitivity level and an indication of a user-selected location and the corresponding set of functions comprises opening and displaying an instance of the asset (represented by the asset icon) at the user-selected location wherein the window opened for the instance is larger or smaller (or a certain aspect ratio) depending on the detected sensitivity level of the selection of the asset icon. This mapping allows the user to open and display different sizes of an instance of the asset represented by the asset icon at the user-selected location.

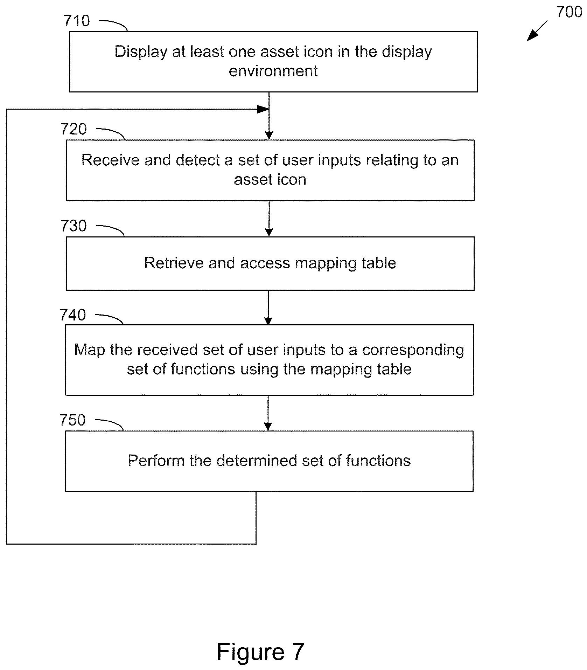

Figure 7 illustrates a flow diagram of method steps for mapping a received set of user inputs to a set of functions, according to various embodiments of the present invention. Although the method steps are described in conjunction with the systems of Figures 1-4 and 6, persons skilled in the art will understand that any system configured to perform the method steps, in any order, is within the scope of the present invention.

As shown, a method 700 begins at step 710, where the display environment engine 140, when executed by processing unit 120, displays at least one asset icon 210 in the display environment 200. The at least one asset icon 210 may represent an original instance of an asset comprising an application or an object. At step 720, the display environment engine 140 receives and detects a set of user inputs relating to the asset icon 210 from a user. At step 730, the display environment engine 140 retrieves and accesses a mapping table 170. At step 740, the display environment engine 140 maps the received set of user inputs to a corresponding set of functions using the mapping table 170. At step 750, the display environment engine 140 executes/performs the determined set of functions. The method 700 then continues at step 720.

In sum, a display environment engine 140 implements an underlying functionality of a display environment 200 that enables users to more easily open and position instances of an asset. The display environment engine 140 displays an asset icon at an original location in a display environment, the asset icon representing an original instance of an asset. The display environment engine 140 receives, for the user, a first selection of the asset icon and a first indication of a first location in the display environment 200, the first location being different than the original location. In response, the display environment engine 140 opens and displays a first instance of the asset at the first location. In further embodiments, the display environment engine 140 receives and detects various distinct sets of user inputs which are mapped to corresponding sets of functions using a mapping table 150 to provide additional functionality to the display environment 200. For example, the additional functionality may enable the user to open and display a new instance of an asset at a default location, enable a user to associate asset icons with each other, etc.

At least one advantage of the disclosed technique is that it allows users to easily and efficiently open and position instances of an asset in a display environment. For example, the disclosed technique allows a user to open an instance of an asset at a desired location in a display environment without requiring relocation of the opened instance. Another advantage of the disclosed technique is that it provides additional functionality to the display environment 200 to enable the user to easily and efficiently perform other functions related to asset icons and/or assets.

The descriptions of the various embodiments have been presented for purposes of illustration, but are not intended to be exhaustive or limited to the embodiments disclosed. Many modifications and variations will be apparent to those of ordinary skill in the art without departing from the scope and spirit of the described embodiments.

Aspects of the present embodiments may be embodied as a system, method or computer program product. Accordingly, aspects of the present disclosure may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, enable the implementation of the functions/acts specified in the flowchart and/or block diagram block or blocks. Such processors may be, without limitation, general purpose processors, special-purpose processors, application-specific processors, or field-programmable processors or gate arrays.

The flowchart and block diagrams in the figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

While the preceding is directed to embodiments of the present disclosure, other and further embodiments of the disclosure may be devised without departing from the basic scope thereof, and the scope thereof is determined by the claims that follow.

## Claims

1. A computer-implemented method (500; 700) for opening an instance of an asset (160), the method comprising:
displaying (510; 710) an asset icon (210) at an original location in a display environment (200), the asset icon (210) representing an original instance of an asset (160);
receiving (520) a first selection of the asset icon (210);
receiving (530) a first indication of a first location in the display environment (200), the first location being different than the original location; and
in response to receiving the first selection and the first indication, displaying (540) a first instance of the asset (160) at the first location.

2. The computer-implemented method (500; 700) of claim 1, wherein the asset (160) comprises an application or object.

3. The computer-implemented method (500; 700) of claim 1 or 2, wherein the first location is selectable by a user and does not comprise a default location.

4. The computer-implemented method (500; 700) of any one of claims 1 to 3, wherein receiving (530) the first indication of the first location in the display environment (200) comprises receiving drag and drop input indicating that the asset icon (210) is to be moved to the first location within the display environment (200), then to reside at the first location.

5. The computer-implemented method (500; 700) of any one of claims 1 to 4, wherein receiving (530) the first indication of the first location in the display environment (200) comprises receiving at least one tap on a display screen at the first location within the display environment (200).

6. The computer-implemented method (500; 700) of any one of claims 1 to 5, wherein displaying (540) the first instance of the asset (160) at the first location comprises displaying a first window (220) for the first instance of the asset (160) at the first location.

7. The computer-implemented method (500; 700) of claim 6, further comprising, after displaying the first window (220), placing (550) a cursor within the first window (220) for receiving user input within the first window (220).

8. The computer-implemented method (500; 700) of any one of claims 1 to 7, further comprising:
continuing to display the asset icon (210) at the original location in the display environment (200);
receiving a second selection of the asset icon (210);
receiving a second indication of a second location in the display environment (200), the second location being different than the original location and the first location; and
in response to receiving the second selection and the second indication, displaying a second instance of the asset (160) at the second location, optionally wherein the second instance of the asset (160) is distinct from the first instance of the asset (160).

9. The computer-implemented method (500; 700) of any one of claims 1 to 8, further comprising:
receiving (560) an input indicating that the first instance of the asset (160) should be closed or minimized; and
in response, closing the first instance of the asset (160) and displaying a first icon (410) at the first location, the first icon (410) representing the first instance of the asset (160).

10. The computer-implemented method (500; 700) of claim 1, wherein displaying (540) comprises mapping the first selection and the first indication to a first set of functions (620) via a mapping table (150; 170) that include displaying the first instance of the asset (160) at the first location.

11. The computer-implemented method (500; 700) of claim 10, further comprising receiving (720) a set of inputs (610) related to the asset icon (210) that map to a second set of functions (620) comprising moving the asset icon (210) to a second location in the display environment (200).

12. The computer-implemented method (500; 700) of claim 10, further comprising receiving (720) a set of inputs (610) related to the asset icon (210) that map to a second set of functions (620) comprising displaying a second instance of the asset (160) at a default location in the display environment (200).

13. A non-transitory computer-readable medium storing program instructions that, when executed by one or more processors (120), cause the one or more processors (120) to perform the computer-implemented method (500; 700) of any one of claims 1 to 12.

14. A system (100) configured for opening an instance of an asset (160), comprising:
a memory (125) that includes a display environment engine (140); and
one or more processors (120) coupled to the memory (125) and, upon executing the display environment engine (140), configured to perform the computer-implemented method (500; 700) of any one of claims 1 to 12.

15. A computer program adapted to perform, when executed by one or more processors (120), the computer-implemented method (500; 700) of any one of claims 1 to 12.
